# EUROPÄISCHE PATENTANMELDUNG

(11) **EP 4 703 825 A1**
(43) Veröffentlichungstag der Anmeldung: **04.03.2026**
(21) Anmeldenummer: 25191465.1
(22) Anmeldetag: 24.07.2025
(51) Int. Cl.: G05B 19/418, G06T 7/20

(54) **VERFAHREN UND ANORDNUNG ZUR OPTISCHEN ÜBERWACHUNG EINES PROZESSSCHRITTS IN EINER INDUSTRIEANLAGE**

(30) Priorität: 29.08.2024 DE 102024124709
(71) Anmelder: SICK AG, 79183 Waldkirch (DE)
(72) Erfinder: Schonhardt, Stefan, 79256 Buchenbach (DE); Mehne, Philipp, 79106 Freiburg (DE)
(74) Vertreter: Manitz Finsterwald Patent- und Rechtsanwaltspartnerschaft mbB

(57) **Zusammenfassung**

In einer Ausführungsform umfasst ein Verfahren zum Überwachen eines Prozessschritts in einer Industrieanlage ein optisches Erfassen mindestens einer Bewegung eines Objekts und Erzeugen entsprechender Bilddaten, wobei das Objekt während des Prozessschritts zumindest teilweise händisch von einem Werker geführt wird, ein Erzeugen mindestens einer Objekttrajektorie in Abhängigkeit der mindestens einen erfassten Bewegung anhand der Bilddaten unter Verwendung einer Objekterkennungsmethode, wobei die mindestens eine Objekttrajektorie eine Zeitinformation und eine zugehörige Ortsinformation umfasst, und ein Speichern mehrerer Abbildungen des Objekts auf Basis der mindestens einen Objekttrajektorie und der Bilddaten als Musterobjektbilder.

## Beschreibung

Die vorliegende Erfindung betrifft ein Verfahren sowie eine Anordnung zur optischen Überwachung eines Prozessschritts in einer Industrieanlage.

In industriellen Produktionsprozessen werden Produkte wie beispielsweise bestückte Halbleiterplatinen in mehreren Schritten hergestellt. Der Grad der Automatisierung nimmt hierbei stetig zu und erstreckt sich nun auch auf eine Qualitätskontrolle des erstellten Produkts. Die in dieser Anmeldung betrachteten Prozessschritte sind Teil eines Produktionsprozesses oder Logistikprozesses und werden unter Beteiligung einer Person, die im Folgenden als Werker bezeichnet wird, also zumindest teilweise händisch durchgeführt. Der Werker arbeitet dabei an einem statischen Arbeitsplatz oder an einer statischen Arbeitsstation, die Teil einer Industrieanlage ist.

Es ist bekannt, zur Überprüfung der Qualität eines in einem Prozessschritt erstellten Produkts oder Teilprodukts, beispielsweise zur Überprüfung einer in diesem Schritt erstellten Baugruppe auf Vollständigkeit, ein Bild dieses Produkts in einem separaten Prozess zu analysieren. In diesem Qualitätskontrollprozess wird das statische Bild des Endprodukts mit einem Bild, welches einen Sollzustand des Produkts, also beispielsweise eine korrekt bestückte Baugruppe, zeigt, verglichen. Diese Vorgehensweise stellt jedoch hohe Anforderungen an die Bildqualität. So muss beispielsweise das Bild des im Prozessschritt erzeugten Produkts eine relativ hohe Auflösung besitzen und sollte möglichst keine Reflexionen aufweisen. Zudem erfordert ein Training eines im Rahmen dieser automatisierten Qualitätskontrolle eingesetzten Algorithmus einen hohen zeitlichen Aufwand und umfangreiche Datensätze. Trotz der bisher bekannten Maßnahmen ist es schwierig bis unmöglich, besonders kleine bzw. transparente Komponenten sicher zu erkennen. Unterschiedliche Beleuchtungen sowie Reflexionen im Bild einer prozessierten Baugruppe führen bereits zu Detektionsproblemen.

Demzufolge besteht eine Aufgabe darin, die Qualitätskontrolle von zumindest teilweise händisch durchgeführten Prozessschritten weiter zu verbessern.

Diese Aufgabe wird durch das Verfahren gemäß Anspruch 1, sowie durch die Anordnung gemäß Anspruch 10 gelöst. Vorteilhafte Weiterbildungen der Erfindung sind der Beschreibung, den Zeichnungen sowie den abhängigen Patentansprüchen zu entnehmen.

Gemäß dem Verfahren wird ein Prozessschritt in einer Industrieanlage optisch überwacht. Im Einzelnen werden zumindest die folgenden Schritte ausgeführt:
- Mindestens eine Bewegung eines Objekts wird optisch erfasst und entsprechende Bilddaten werden erzeugt, wobei das Objekt während des Prozessschritts zumindest teilweise händisch von einem Werker geführt wird,
- in Abhängigkeit der mindestens einen erfassten Bewegung wird anhand der Bilddaten und unter Verwendung einer Objekterkennungsmethode mindestens eine Objekttrajektorie erzeugt, wobei die mindestens eine Objekttrajektorie eine Zeitinformation und eine zugehörige Ortsinformation umfasst,
- mehrere Abbildungen des Objekts werden auf Basis der mindestens einen Objekttrajektorie und der Bilddaten als Musterobjektbilder gespeichert.

Mit Hilfe des vorgeschlagenen Verfahrens wird die Bewegung eines Objekts, beispielsweise einer Komponente, eines Werkstücks oder eines Werkzeugs, welches der Werker mit seiner Hand oder manuell unter Verwendung eines Werkzeugs oder durch den Einsatz einer Maschine bewegt, bereits während der Bewegung, also im Verlauf des Prozessschritts, optisch erfasst, also aufgezeichnet. Bilddaten, beispielsweise eine Videosequenz, die eine Folge von Einzelbildern umfasst, werden erzeugt. Auf Basis dieser Bilddaten wird die Objekttrajektorie erzeugt. Die Objekttrajektorie ist dabei eine insbesondere zweidimensionale Bahnkurve, die die vom Objekt erfahrene Bewegung in abstrakter Weise widerspiegelt. Die Objekterkennungsmethode wird verwendet, um das Objekt in den Bilddaten zu erkennen. Ausgehend von der Objekttrajektorie und den Bilddaten werden mehrere Abbildungen des Objekts als Musterobjektbilder abgespeichert. Ein Musterobjektbild ist dabei ein Vorbild bzw. eine Vorlage, welches bzw. welche das Objekt so zeigt, dass es wiedererkennbar ist. Ein oder mehrere Musterobjektbilder können als Musterobjekt-Datensatz bezeichnet werden.

Durch die erfindungsgemäße Verfolgung der mit dem Objekt durchgeführten Bewegung werden Musterbilder erzeugt, die das Objekt jeweils aus unterschiedlichen Betrachtungswinkeln zeigen. Die auf die beschriebene Art und Weise erzeugten Musterbilder werden vorzugsweise zum Training der eingesetzten Algorithmik, also der Objekterkennungsmethode, eingesetzt. Dies führt zu einer deutlichen Reduktion des Trainingsaufwands, der bei Stand der Technik gemäßen Lösungen erforderlich ist. Gleichzeitig wird die Zuverlässigkeit der Objekterkennung erhöht, was zu einer Verbesserung der Qualitätskontrolle führt. Für diese Objekterkennung sind vorzugsweise keine optischen Marker, wie zum Beispiel Kodierungssymbole in Form von Bar- oder Matrixcodes, erforderlich.

Das Speichern beinhaltet vor allem ein permanentes Speichern.

Gemäß einer Weiterbildung umfasst die Objekterkennungsmethode eine künstliche Intelligenz, Kl. Dabei umfasst die KI ein künstliches neuronales Netz, welches insbesondere als faltendes neuronales Netz (englisch: Convolutional Neural Network, CNN) ausgeführt sein kann.

Eine derartige KI, vor allem ein CNN, eignen sich zur Detektion von Objekten, beispielsweise Schrauben, oberflächenmontierbaren Bauteilen oder ähnlichem, und ermöglichen eine zuverlässige Erkennung des jeweiligen Objekts.

Gemäß einer Weiterbildung wird die KI mit den gespeicherten Musterobjektbildern trainiert.

Beim Training der in der Objekterkennungsmethode verwendeten KI stellen die Musterobjektbilder jeweils die sogenannten gelabelten Daten, also Sollbilder des Objekts, dar. Durch das einem Musterobjektbild anhaftende Label wird eine Erkennung von guten bzw. schlechten Bildern möglich. Die während des Prozessschritts, d.h. im Prozess, erzeugten und gespeicherten Musterobjektbilder werden verwendet, um die KI der Objekterkennungsmethode zu trainieren. Da die Musterbilder erfindungsgemäß anhand der Bewegung des Objekts im Raum erzeugt werden, steht automatisch eine große Anzahl von Musterbildern mit jeweils unterschiedlicher Orientierung des Objekts zur Verfügung.

Im Einzelnen wird ein der Objekterkennungsmethode zugrundeliegender Algorithmus, beispielsweise die KI, ausgehend von einem groben Modell mittels des Trainings und durch maschinelles Lernen (englisch: Machine Learning) mit der Zeit verbessert bzw. verfeinert. Ausgangspunkt bilden beispielsweise Musterobjektbilder, die bei einer ordnungsgemäß bzw. bestimmungsgemäß durchgeführten Bewegung des Objekts erzeugt werden. Das grobe Modell bezieht sich hier beispielsweise auf eine initiale Bezeichnung des Objekts, wobei die Bezeichnung (z.B. ein Tagging) beispielsweise mit einer (geringen) Anzahl von Musterbildern des Objekts verknüpft ist. Bei der Verwendung des groben Modells ist die Detektionsrate noch nicht optimal, bzw. nur unter guten Bedingungen annehmbar. In dieser Anfangsphase des Trainings kann beispielsweise ein sogenanntes Tagging, welches auf einer geringen Anzahl von Bildern basiert, zum Einsatz kommen oder eine Erkennung auf Basis eines allgemeinen Modells verwendet werden. Ein Beispiel für letzteres ist die Erkennung einer Schraube, ohne Berücksichtigung weitere Details zu deren Ausgestaltung als Kreuz-, Schlitz-, Torx-Schraube, Länge, Farbe oder ähnlichem. Mit der Anzahl bzw. dem Umfang der Trainingsdaten nimmt die Erkennungswahrscheinlichkeit zu. Anders ausgedrückt bezeichnet "grob" ein initiales Labeln mit noch geringer Erkennungswahrscheinlichkeit. Im Anschluss trainiert sich die Objekterkennungsmethode, d.h. die zugrundeliegende KI, selbst, indem sie basierend auf der Kenntnis eines Objekts und seiner Position ein selbständiges Tagging durchführt.

Gemäß einer weiteren Ausführungsform wird das Training der KI auf einer Recheneinheit außerhalb der Industrieanlage vorab und/oder im Nachhinein durchgeführt.

Die Recheneinheit umfasst beispielsweise einen Prozessor, der als CPU oder GPU ausgeführt sein kann. Der Prozessor kann auch spezifisch für die Implementierung eines neuronalen Netzes ausgelegt sein.

Aufgrund der geringeren Rechenleistung, die gewöhnlich innerhalb einer Industrieanlage verfügbar ist, wird das Training der KI vorzugsweise außerhalb dieser Anlage auf einer geeigneten Hardware durchgeführt. Die KI wird demzufolge vor der Ausführung in der Industrieanlage trainiert. Zusätzlich kann sie jederzeit nachtrainiert werden. Bei der Realisierung der KI auf Basis eines neuronalen Netzes werden während des Trainings die in diesem Netz verwendeten Gewichte und/oder Aktivierungsfunktionen laufend angepasst. Das Training kann überwacht oder auch nicht überwacht erfolgen. Die Anpassung der Gewichte und die alternative oder zusätzliche Anpassung der Aktivierungsfunktionen des neuronalen Netzes wird unter der Maßgabe durchgeführt, dass eine vorgegebene Verlustfunktion (englisch: Loss Function) minimiert wird, so dass letztendlich eine Abweichung zwischen Ist- und Sollergebnis verringert wird.

In einer Weiterbildung umfasst die Objekterkennungsmethode eine Zero-Shot-Objekterkennung.

Die Zero-Shot-Objekterkennung ist eine aus der Computer-Vision bekannte Methode zur Erkennung von Objekten und deren Klassen in Bildern, ohne vorheriges Training oder Kenntnis der Klassen. Beispielsweise erhält ein Modell, auf dem die Zero-Shot-Objekterkennung basiert, ein Bild, welches das gewünschte Objekt zeigt, als Eingangsbild sowie eine Liste von Kandidatenklassen. Das Modell liefert daraufhin Begrenzungsrahmen, sogenannte Bounding Boxes, in denen das Objekt erkannt wurde. In einem beispielhaften Szenario wird die Zero-Shot-Objekterkennung bei der initialen Erkennung von Komponenten bzw. Objekten ohne Verwendung von Musterbildern oder unter Einsatz einer geringen Anzahl von Musterbildern eingesetzt. Bei erstmaliger Vorlage eines bestimmten Objekts durch einen Werker, kann die Objekterkennungsmethode das Objekt selbständig zumindest grob erkennen, zum Beispiel, dass es sich um ein Gehäuse handelt oder handeln könnte. Der Werker kann daraufhin die Erkennung bestätigen oder korrigieren.

Mit dem vorgeschlagenen Verfahren ist es vorteilhafterweise möglich, mit vertretbarem Aufwand ein Detektortraining durchzuführen, so dass schließlich bei der Überwachung des Prozessschritts ein anvisiertes Objekt zuverlässig erkannt wird und im Raum verfolgt, also getrackt, wird. Damit kann die Qualität des Prozessschritts bzw. seines Ergebnisses schon während der Durchführung überwacht bzw. beurteilt werden. Der Detektor wird hier im Wesentlichen durch die Objekterkennungsmethode repräsentiert.

Gemäß einer Weiterbildung beginnt die mindestens eine Objekttrajektorie an einer bekannten Startposition. Alternativ beginnt die mindestens eine Objekttrajektorie an einer bekannten Startposition und endet an einer bekannten Endposition. Die Startposition entspricht dabei einer Ausgangsposition der Bewegung des Objekts. Die Endposition entspricht einer Zielposition der Bewegung des Objekts.

Die Verwendung einer bekannten Startposition und die optionale zusätzliche Verwendung einer bekannten Zielposition vereinfachen eine Erkennung des Objekts und das Erstellen der Objekttrajektorie. Damit wird das Verfahren weiter optimiert, da die Objekterkennung am Anfang der Bewegung sowie optional zusätzlich am Ende der Bewegung auf den Bildbereich beschränkt werden kann, an dem sich die Start- bzw. die Zielposition befindet. Zudem ist es möglich, auch im Falle einer zeitweisen Verdeckung des Objekts während der Bewegung, beispielsweise durch ein Werkzeug, durch Interpolation oder Extrapolation die Objekttrajektorie zu vervollständigen. Damit kann trotz dieser vorübergehenden Verdeckung die Qualität des Prozessschritts beurteilt werden.

In einer weiteren Ausführungsform umfasst das Speichern mehrerer Abbildungen des Objekts auf Basis der mindestens einen Bewegungstrajektorie und der Bilddaten als Musterobjektbilder: ein Analysieren der Bilddaten, die eine Folge von Einzelbildern umfassen, und das Detektieren des Objekts in mehreren Einzelbildern der Bilddaten. Dabei erfolgt das Detektieren auf Basis der Zeit- und/oder Ortsinformation der Objekttrajektorie.

Um Musterobjektbilder zu erhalten, die anschließend als gelabelte Darstellungen des Objekts dienen, werden die Bilddaten mit Hilfe der Zeit- und/oder Ortsinformation der Objekttrajektorie ausgewertet. Die Analyse kann sich dabei jeweils auf den Bildbereich beschränken, in dem sich das Objekt gemäß der Trajektorie gerade befindet.

Durch die Kenntnis der Start- bzw. Endposition des Objekts wird bei wiederholter Durchführung des Verfahrens die Objekterkennungsmethode aufgrund der Kenntnis der Position des Objekts im Bild automatisiert über die Zeit verbessert. Da mehrere Bilder zur Erkennung eines Objekts verwendet werden, sind die Anforderungen an die Qualität eines einzelnen Bildes beispielsweise bezüglich seiner Auflösung oder der Beleuchtung, geringer. Dadurch werden zusätzlich die bei der Implementierung des Verfahrens anfallenden Kosten reduziert.

Gemäß einer Weiterbildung umfasst das Speichern des Weiteren: ein Speichern mehrerer Einzelbilder, die das detektierte Objekt jeweils zeigen, wobei jedes Einzelbild ein Musterobjektbild ist, oder alternativ ein Erzeugen jeweils eines Bildausschnitts aus einem oder mehreren der Einzelbilder, die jeweils das detektierte Objekt zeigen, wobei der jeweilige Bildausschnitt einen Bildbereich des Einzelbildes umfasst, welcher das Objekt zeigt, und ein Speichern des jeweiligen Bildausschnitts als ein Musterobjektbild.

Demgemäß ist ein Musterobjektbild entweder ein Einzelbild der während der optischen Erfassung der mindestens einen Bewegung aufgezeichneten Bilddaten, oder ein Bildausschnitt aus einem derartigen Einzelbild. In jedem Fall zeigt das Musterobjektbild das Objekt während der Ausführung des Prozessschritts. Die Verwendung lediglich eines Bildausschnitts reduziert dabei den Speicherplatzbedarf. Zudem kann aufgrund der reduzierten Datenmenge die Objekterkennung beschleunigt werden.

Die Musterobjektbilder können beispielsweise in einer Datenbank dauerhaft, also permanent, abgelegt werden.

Gemäß einer weiteren Ausführungsform wird das vorgeschlagene Verfahren für die mindestens eine Bewegung mehrmalig durchlaufen.

Dadurch wird eine große Menge weiterer Musterobjektbilder erzeugt, die die Zuverlässigkeit der Erkennung des Objekts weiter verbessern. Die große Menge an auf diese Art und Weise erzeugten Musterobjektbildern wird dazu eingesetzt, das Verfahren, insbesondere die darin eingesetzte Objekterkennungsmethode, immer weiter zu verfeinern und zu verbessern. Dies kann beispielsweise im Rahmen eines bestärkenden Lernens (englisch: Reinforcement Learning) erfolgen. Dadurch wird eine Robustheit gegenüber Umgebungsänderungen an einem Arbeitsplatz, an dem der Prozessschritt ausgeführt wird, erreicht.

Weiterer Gegenstand der vorliegenden Erfindung ist eine Anordnung zur optischen Überwachung eines Prozessschritts in einer Industrieanlage. Die Anordnung weist eine Kamera, eine Verarbeitungseinheit und eine Speichereinheit auf, welche untereinander gekoppelt sind. Die Kamera ist dazu eingerichtet, mindestens eine Bewegung eines Objekts optisch zu erfassen, wobei das Objekt während des Prozessschritts zumindest teilweise händisch von einem Werker geführt wird. Die Verarbeitungseinheit ist dazu eingerichtet, mindestens eine Objekttrajektorie in Abhängigkeit der mindestens einen erfassten Bewegung anhand der Bilddaten unter Verwendung einer Objekterkennungsmethode zu erzeugen und mehrere Abbildungen des Objekts auf Basis der mindestens einen Objekttrajektorie und der Bilddaten als Musterobjektbilder in der Speichereinheit abzuspeichern. Die mindestens eine Objekttrajektorie umfasst eine Zeitinformation und eine zugehörige Ortsinformation.

Der Prozessschritt wird an einem statischen Arbeitsplatz der Industrieanlage ausgeführt. An diesem Arbeitsplatz befindet sich die erfindungsgemäße Anordnung. Die Kamera umfasst vorzugsweise eine Videokamera. Beispielsweise wird hierfür eine sogenannte Field-of-View-Kamera eingesetzt, die entweder feststehend an dem Fertigungsarbeitsplatz montiert oder an dem Werker befestigt ist, beispielsweise an dessen Kopf oder Schulter. In einer Ausgestaltung der Erfindung können eine oder mehrere weitere Kameras zur optischen Erfassung eingesetzt werden. Die von den mehreren Kameras erzeugten Videoströme werden in einer derartigen Implementierung in geeigneter Art und Weise zu den anspruchsgemäßen Bilddaten kombiniert. Mit Vorteil können beim Einsatz zweier Kameras 3D-Daten, beispielsweise dreidimensionale Bahnkurven bzw. Raumkurven, erzeugt werden.

Die Verarbeitungseinheit wird beispielsweise auf Basis eines Mikroprozessors realisiert. Die Speichereinheit umfasst einen permanenten Speicher.

Die erfindungsgemäße Anordnung ermöglicht das Erzeugen geeigneter Trainingsdaten, nämlich der Musterobjektbilder, für eine optische Überwachung eines Prozessschritts in einer Industrieanlage, wodurch der Einlernaufwand reduziert wird. Auch werden die optischen Anforderungen, die dem Erkennen des Objekts zugrunde liegen, reduziert. Trotz allem ist es möglich, selbst kleine oder transparente Objekte zuverlässig zu erkennen, so dass eine Qualität der in dem Prozessschritt ausgeführten Tätigkeit beurteilt werden kann.

Im Übrigen gelten für die Anordnung die Ausführungen zum erfindungsgemäßen Verfahren entsprechend, dies gilt insbesondere hinsichtlich Vorteilen und Ausführungsformen.

Die hierin beschriebenen Ausführungsformen können untereinander kombiniert werden, sofern sich nicht explizit etwas anderes ergibt.

Insbesondere ist die erfindungsgemäße Anordnung zur Ausführung des erfindungsgemäßen Verfahrens eingerichtet.

In einem beispielhaften Prozessschritt wird das erfindungsgemäße Verfahren bzw. die Anordnung bei der Überwachung der Montage von kleinen Schrauben in der Mobiltelefonmontage eingesetzt. Es soll überprüft werden, ob alle Schrauben montiert wurden. Bei der erfindungsgemäßen Überwachung dieses Montageschritts, wird eine Schraube bestehend aus Kopf und Schraubenkörper bei der Fixierung auf einem Schrauber, sowie bei der Bewegung zum Bohrloch aus mehreren Raumrichtungen mittels einer Vielzahl von Bildern mehrdimensional erfasst. Die Schraube wird dadurch leichter und zuverlässiger erkannt und anhand ihrer Position im Raum verfolgt. Da die Start- bzw. Zielpositionen der Komponenten bei sich wiederholenden Prozessschritten bekannt sind, kann auch bei einer zeitweisen Verdeckung der Schraube im Bild mittels Extrapolation auf deren Position geschlossen werden. Wird hingegen, wie aus dem Stand der Technik bekannt, eine Qualität lediglich anhand eines statischen Bildes nach Abschluss des manuellen Prozessschritts überprüft, so sind in diesem Beispiel nur die kleinen Schraubenköpfe, die einen geringen Anteil am Gesamtbild haben, erkennbar, was eine Qualitätskontrolle erschwert und deren Zuverlässigkeit beeinträchtigt.

Zusätzlich kann in einer weiteren Ausführungsform mittles einer Erkennung eines in dem Prozessschritt verwendeten Werkzeugs, bei dem die Erkennbarkeit gut ist, von diesem ausgehend durch die Objekterkennungsmethode auf die Position der Komponente geschlossen werden, wodurch der zu untersuchenden Bildbereich deutlich eingeschränkt wird. Dies ist insbesondere bei sehr kleinen Komponenten wie z.B. Montageschrauben, bzw. optisch schwer erkennbaren Komponenten wie z.B. Linsen, Filtern, oder ähnlichem von Vorteil. Diese werden also unter Zuhilfenahme mit ihrem Kontakt zu Schraubendreher, Pinzette, Saugstift, oder ähnlichem erkannt.

Nachfolgend wird die Erfindung rein beispielhaft unter Bezugnahme auf die Zeichnungen beschrieben. Funktions- bzw. wirkungsgleiche Zeichnungselemente tragen gleiche Bezugszeichen. Es zeigen:
- Fig. 1: eine schematische Darstellung eines beispielhaften Fertigungsarbeitsplatzes,
- Fig. 2A bis 2C: schematische Darstellungen zu einem beispielhaften Prozessschritt, und
- Fig. 3: ein Beispiel für eine Zero-Shot Objekterkennung.

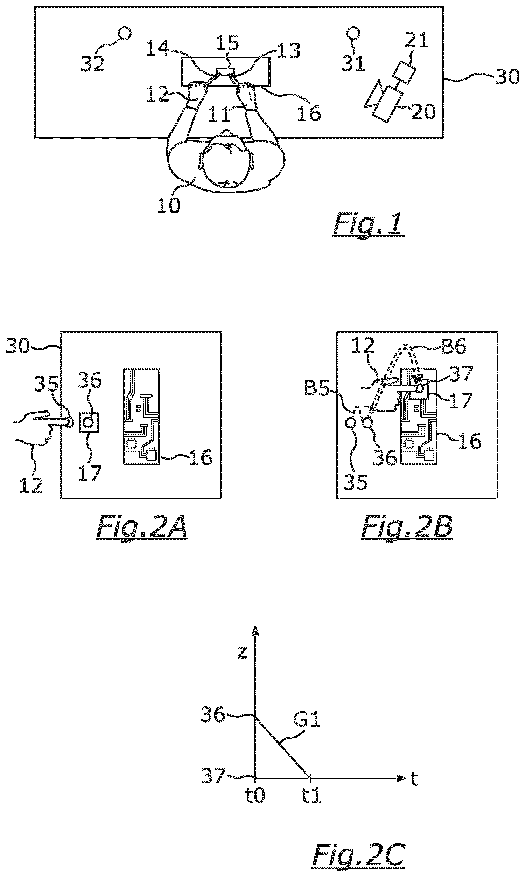

Fig. 1 zeigt eine schematische Darstellung eines beispielhaften Fertigungsarbeitsplatzes an dem das erfindungsgemäße Verfahren bzw. die Anordnung eingesetzt wird. Der Fertigungsarbeitsplatz ist Teil einer Industrieanlage. Eine Person, hier ein Werker 10, arbeitet an dem beispielhaften Fertigungsarbeitsplatz 30 unter Einsatz seiner rechten Hand 11 und seiner linken Hand 12. Beispielsweise wird mit der rechten Hand 11 ein Lötkolben 13 geführt. Mit der linken Hand 12 wird ein Lötzinn 14 gehalten. Ein einzulötendes Bauteil 15 ist auf einer Platine 16 platziert. Eine feststehende Kamera 20 ist in Relation zu dem Werker 10 und dem Fertigungsarbeitsplatz 30 so montiert, dass sie die Bewegungen des Werkers 10 optisch erfassen kann. Die Auswertung der erfassten Bewegungen erfolgt in einer mit der Kamera 20 verbundenen Auswerteinheit 21. Die Musterobjektbilder werden in der Speichereinheit 22 abgelegt.

In der beispielhaften Darstellung von Fig. 1 hat der Werker 10 bereits den Lötkolben 13 aus dessen Ruheposition 31 am Fertigungsarbeitsplatz 30 geholt und am einzulötenden Bauteil 15 positioniert. Des Weiteren hat der Werker 10 das Lötzinn 14 aus dessen Ruheposition 32 am Fertigungsarbeitsplatz 30 genommen und ebenfalls zum einzulötenden Bauteil 15 bewegt.

Die Figuren 2A bis 2C zeigen beispielhafte schematische Darstellungen, die sich auf einen beispielhaften Prozessschritt, in dem das erfindungsgemäße Verfahren eingesetzt wird, beziehen. Der Prozessschritt wird beispielsweise an einem Fertigungsarbeitsplatz wie in Figur 1 gezeigt durchgeführt. In diesem Beispiel wird ein Pad 17 auf einer Platine 16 platziert.

Fig. 2A zeigt die Anfangssituation für diesen Prozessschritt, in welchem eine Hand des Werkers, hier seine linke Hand 12, in einer Ausgangsposition 35 ist. Das Bauteil 17 befindet sich in einer Ausgangsposition 36.

Fig. 2B zeigt eine schematische Darstellung einer Bewegung, die in diesem Prozessschritt durchgeführt wird. Die Bewegung, die das Bauteil 17 erfährt, ist als Bewegung B6 dargestellt. Die Bewegung B6 startet mit dem Ergreifen des Bauteils 17 durch die Hand 12 an der Ausgangsposition 36 und endet mit dem Platzieren des Pads 17 an der Zielposition 37 auf der Platine 16.

Fig. 2C zeigt die aus der optisch erfassten Bewegung B6 von Fig. 2B erzeugte Objekttrajektorie G6. Die Objekttrajektorie G6 ist dabei bezogen auf einen auf der z-Achse dargestellten räumlichen Abstand zur Zielposition 37 des Bauteils 17 bei Z=0 in Relation zur Zeit t dargestellt. Zum Zeitpunkt t0 beginnt die Trajektorie G6 an der Startposition 36. Zum Zeitpunkt t1 endet die Trajektorie G6 an der Zielposition 37.

Die Durchführung der Bewegung B6 wird mit einer Kamera, beispielsweise der Kamera 20 aus Figur 1, optisch erfasst, d.h. es wird eine Vielzahl von Bildern, die jeweils zumindest das Bauteil 17 zeigen, erzeugt. Die erzeugten Bilder zeigen gegebenenfalls zusätzlich zu dem Bauteil 17 die Hand 12 und/oder die Platine 16, sowie den Fertigungsarbeitsplatz im Hintergrund. Aufgrund der Bewegung ist das Bauteil 17 auf den Bildern in unterschiedlichen Orientierungen gezeigt. Durch Einsatz der Objekterkennungsmethode wird in den erzeugten Bildern jeweils das Bauteil 17 als das Objekt, welches in Bewegung ist, erkannt. Dementsprechend wird die Objekttrajektorie G6 erzeugt. Mehrere der erzeugten Bilder, welche eine Abbildung des Bauteils 17 zeigen, werden in Form eines Einzelbildes oder in Form eines das Bauteil 17 zeigenden Ausschnitts aus einem Einzelbild, als Musterobjektbilder abgespeichert, zum Beispiel in der Speichereinheit 22 aus Figur 1.

Diese Musterobjektbilder werden beispielsweise für das Training einer von der Objekterkennungsmethode umfassten KI verwendet. Diese KI kann auch auf einer externen, nicht gezeigten Recheneinheit trainiert werden. Die trainierte KI kann anschließend wieder auf die Auswerteeinheit 21 in Figur 1 übertragen werden.

Durch die erfindungsgemäße Verfolgung der Bewegung B6 im Raum wird eine große Anzahl von Bilddaten mit unterschiedlichen Orientierungen des Objekts 17 erzeugt. Die Objekterkennungsmethode "weiß" daher, um welches Objekt es sich handelt und wo es sich im Bild befindet. Ausgehend von einem groben Modell verbessert sich die Objekterkennungsmethode mit jedem Durchlauf des vorgeschlagenen Verfahrens automatisch.

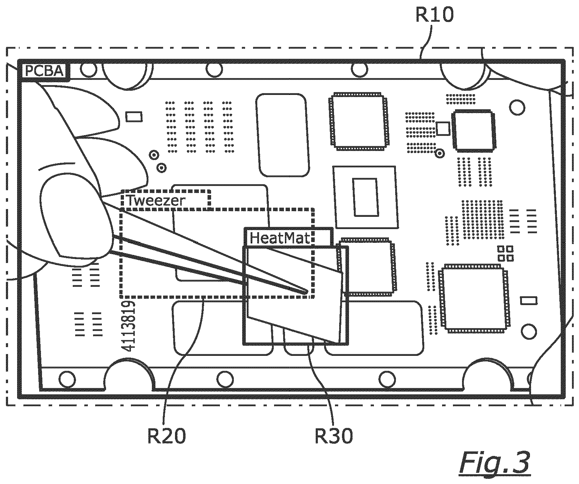

Figur 3 zeigt ein Beispiel für eine Zero-Shot Objekterkennung, die in dem beschriebenen Verfahren eingesetzt werden kann. Das Bild zeigt eine Momentaufnahme während eines Prozessschritts, bei dem eine Wärmeleitmatte, hier bezeichnet als HeatMat, mit Hilfe einer Pinzette, hier Tweezer genannt, auf einer Platine, welche als PCBA bezeichnet ist, platziert wird. Die Pinzette wird durch die Hand des Werkers geführt. Die Objekterkennungsmethode hat die drei Komponenten erkannt und die Platine mit einem Begrenzungsrahmen R10, die Pinzette mit einem Begrenzungsrahmen R20 und die Wärmeleitmatte mit einem Begrenzungsrahmen R30 versehen. Durch weiteres Training und/oder selbständiges Lernen wird die Objekterkennungsmethode dazu ertüchtigt, beispielsweise auch eine Wärmeleitmatte anderer Farbe oder Größe als solche zu erkennen.

### Bezugszeichenliste

- 10: Werker
- 11, 12: Hand
- 13: Lötkolben
- 14: Lötzinn
- 15: Bauelement
- 16: Platine
- 17: Bauteil
- 20: Kamera
- 21: Auswerteeinheit
- 22: Speichereinheit
- 30: Fertigungsarbeitsplatz
- 31, 32, ..., 37: Position
- B1: Bewegung
- G1: Objekttrajektorie
- t0, t1: Zeitpunkt
- R10, R20, R30: Begrenzungsrahmen

## Patentansprüche

1. Verfahren zur optischen Überwachung eines Prozessschritts in einer Industrieanlage aufweisend:
optisches Erfassen mindestens einer Bewegung (B1) eines Objekts (17) und Erzeugen entsprechender Bilddaten, wobei das Objekt (17) während des Prozessschritts zumindest teilweise händisch von einem Werker (10) geführt wird,
Erzeugen mindestens einer Objekttrajektorie (G1) in Abhängigkeit der mindestens einen erfassten Bewegung (B1) anhand der Bilddaten unter Verwendung einer Objekterkennungsmethode, wobei die mindestens eine Objekttrajektorie (G1) eine Zeitinformation und eine zugehörige Ortsinformation umfasst,
Speichern mehrerer Abbildungen des Objekts (17) auf Basis der mindestens einen Objekttrajektorie (G1) und der Bilddaten als Musterobjektbilder.

2. Verfahren nach Anspruch 1,
wobei die Objekterkennungsmethode eine künstliche Intelligenz, KI, umfasst, wobei die KI ein, insbesondere faltendes, künstliches neuronales Netz umfasst.

3. Verfahren nach Anspruch 2,
wobei die KI mit den gespeicherten Musterobjektbildern trainiert wird.

4. Verfahren nach Anspruch 3,
wobei das Training der KI auf einer Recheneinheit außerhalb der Industrieanlage vorab und/oder im Nachhinein durchgeführt wird.

5. Verfahren nach einem der vorstehenden Ansprüche,
wobei die Objekterkennungsmethode eine Zero-Shot-Objekterkennung umfasst.

6. Verfahren nach einem der vorstehenden Ansprüche,
wobei die mindestens eine Objekttrajektorie (G1) an einer bekannten Startposition (36) beginnt, oder
wobei die mindestens eine Objekttrajektorie (G1) an einer bekannten Startposition (36) beginnt und an einer bekannten Endposition (37) endet und wobei die Startposition (36) einer Ausgangsposition der Bewegung des Objekts (17) und wobei die Endposition (37) einer Zielposition der Bewegung des Objekts (17) entspricht.

7. Verfahren nach einem der vorstehenden Ansprüche,
wobei das Speichern mehrerer Abbildungen des Objekts (17) auf Basis der mindestens einen Objekttrajektorie (G1) und der Bilddaten als Musterobjektbilder umfasst:
Analysieren der Bilddaten, die eine Folge von Einzelbildern umfassen, und
Detektieren des Objekts (17) in mehreren Einzelbildern der Bilddaten, wobei das Detektieren auf Basis der Zeit- und/oder Ortsinformation der Objekttrajektorie (G1) erfolgt.

8. Verfahren nach dem vorstehenden Anspruch,
wobei das Speichern weiter umfasst:
Speichern mehrerer Einzelbilder, die das detektierte Objekt (17) zeigen, wobei jedes Einzelbild ein Musterobjektbild ist, oder
Erzeugen jeweils eines Bildausschnitts aus einem oder mehreren der Einzelbilder, die das detektierte Objekt (17) zeigen, wobei der jeweilige Bildausschnitt einen Bildbereich des Einzelbildes umfasst, welcher das detektierte Objekt (17) zeigt, und Speichern des jeweiligen Bildausschnitts als ein Musterobjektbild.

9. Verfahren nach einem der vorstehenden Ansprüche,
wobei das Verfahren für die mindestens eine Bewegung (B1) mehrmalig durchlaufen wird.

10. Anordnung zur optischen Überwachung eines Prozessschritts in einer Industrieanlage aufweisend eine Kamera (20), eine Verarbeitungseinheit (21) und eine Speichereinheit (22), die untereinander gekoppelt sind,
wobei die Kamera (20) dazu eingerichtet ist, mindestens eine Bewegung (B1) eines Objekts (17) optisch zu erfassen, wobei das Objekt (17) während des Prozessschritts zumindest teilweise händisch von einem Werker (10) geführt wird, und
wobei die Verarbeitungseinheit (21) dazu eingerichtet ist, mindestens eine Objekttrajektorie (G1) in Abhängigkeit der mindestens einen erfassten Bewegung (B1) anhand der Bilddaten unter Verwendung einer Objekterkennungsmethode zu erzeugen und mehrerer Abbildungen des Objekts (17) auf Basis der mindestens einen Objekttrajektorie (G1) und der Bilddaten als Musterobjektbilder in der Speichereinheit (22) abzuspeichern,
wobei die mindestens eine Objekttrajektorie (G1) eine Zeitinformation und eine zugehörige Ortsinformation umfasst.
